# EUROPÄISCHE PATENTSCHRIFT

(11) **EP 4 356 079 B1**
(45) Veröffentlichungstag und Bekanntmachung des Hinweises auf die Patenterteilung: **19.11.2025**
(21) Anmeldenummer: 22729609.2
(22) Anmeldetag: 18.05.2022
(51) Int. Cl.: G01F 1/684, G01F 1/69

(54) **THERMISCHES DURCHFLUSSMESSGERÄT UND VERFAHREN ZUM BETREIBEN EINES THERMISCHEN DURCHFLUSSMESSGERÄTS**
THERMAL FLOWMETER AND METHOD FOR OPERATING A THERMAL FLOWMETER
DÉBITMÈTRE THERMIQUE ET PROCÉDÉ D'EXPLOITATION D'UN DÉBITMÈTRE THERMIQUE

(30) Priorität: 16.06.2021 DE 102021115553
(43) Veröffentlichungstag der Anmeldung: 24.04.2024
(73) Patentinhaber: Endress+Hauser Flowtec AG, 4153 Reinach (CH)
(72) Erfinder: SCHULTHEIS, Hanno, 79539 Lörrach (DE); GRÜN, Alexander, 79539 Lörrach (DE); KAMBER, Sascha, 4456 Tenniken (DE)
(74) Vertreter: Endress + Hauser Group Services (Deutschland) AG+Co. KG
(86) Internationale Anmeldenummer: PCT/EP2022/063477
(87) Internationale Veröffentlichungsnummer: WO 2022/263089

(56) Entgegenhaltungen:
- DE-A1- 102014 114 940
- US-A1- 2021 055 145
- US-B1- 6 227 045
- US-B2- 7 644 612

## Beschreibung

Diese Erfindung betrifft ein thermisches Durchflussmessgerät und ein Verfahren zum Betreiben eines thermischen Durchflussmessgeräts.

Die thermische Durchflussmessung basiert darauf, dass über einen Energieeintrag über eine Sonde in ein an der Sonde vorbeiströmenden Medium oder über die Temperatur einer im Medium befindlichen beheizten Sonde Rückschlüsse auf den Massestrom des Mediums gezogen werden können. Allerdings lässt sich aus dem Energieeintrag bzw. aus der Temperatur der Sonde nicht ableiten, in welche Richtung das Medium strömt.

Die Schrift DE102015118123A1 zeigt einen Sensor eines thermischen Durchflussmessgeräts, welches in ein Messrohr des Durchflussmessgeräts getaucht wird und mehrere Sonden aufweist, die entweder zum Beheizen des Mediums und zur Messung der eigenen Temperatur oder zum Messen der Temperatur des Mediums eingerichtet sind. Des Weiteren ist ein Strömungswiderstand dazu eingerichtet, eine richtungsabhängige Anströmung einer beheizbaren Sonde zu bewirken, um aus der Richtungsabhängigkeit der Anströmung eine eindeutige Richtungsangabe der Strömung des Mediums im Messrohr herleiten zu können. Jedoch hat sich gezeigt, dass bei geringer bis mittlerer Strömungsgeschwindigkeit eine Strömungsrichtungsangabe mit hohen Unsicherheiten behaftet ist.

Die DE102018105046A1, US 2021/055145 A1 und die WO2020244856A1 zeigen weitere Sensoren von thermischen Durchflussmessgeräten mit Strömungsrichtungserkennung, bei welchen bei geringer Strömungsgeschwindigkeit weiterhin hohe Unsicherheiten bei der Strömungsrichtungsangabe vorhanden sind.

Aufgabe der Erfindung ist es daher, ein Durchflussmessgerät vorzuschlagen, mittels welchem eine zuverlässige Strömungsrichtungserkennung des Mediums im Messrohr ermöglicht wird.

Die Aufgabe wird gelöst durch ein thermisches Durchflussmessgerät gemäß dem unabhängigen Anspruch 1 sowie durch ein Verfahren gemäß dem unabhängigen Anspruch 9.

Ein erfindungsgemäßes thermisches Durchflussmessgerät zur Messung des Massedurchflusses eines Mediums in einem Messrohr umfasst
ein Messrohr mit einer Messrohrwand und einer Messrohrachse;
einen Sensor mit vier Sonden, welche Sonden ausgehend von einem Sensorgrundkörper in das Messrohr hineinragen, wobei die Sonden dazu eingerichtet sind, das Medium zu heizen, dessen Temperatur zu bestimmen oder eine Strömung des Mediums im Messrohr zu beeinflussen;
eine elektronische Mess-/Betriebsschaltung, welche dazu eingerichtet ist, zumindest drei Sonden zu betreiben und mittels deren Betrieb Durchflussmesswerte zu erstellen und bereitzustellen,
wobei jede Sonde einen Sondengrundkörper und einen Sondenwirkkörper aufweist, wobei der Sondengrundkörper jeweils auf einer dem Sensorgrundkörper zugewandten Seite der entsprechenden Sonde angeordnet ist, und wobei der Sondenwirkkörper jeweils auf einer dem Sensorgrundkörper abgewandten Seite der entsprechenden Sonde angeordnet ist,
wobei der Sondenwirkkörper dazu eingerichtet ist, das Medium zu heizen, die Temperatur des Mediums zu bestimmen und/oder eine Strömung des Mediums im Messrohr zu beeinflussen,
wobei die Sondengrundkörper säulenförmig ausgestaltet sind,
wobei die Sondengrundkörper auf einer Oberfläche des Sensorgrundkörpers eine Raute aufspannen, wobei die Raute durch Flächenschwerpunkte von Querschnitten der Sondengrundkörper definiert ist,
wobei eine erste Diagonale der Raute parallel zur Messrohrachse ist, und wobei eine zweite Diagonale in einem Messrohrquerschnitt liegt,
wobei eine erste Sonde und eine zweite Sonde dazu eingerichtet sind, das Medium zu beheizen,
wobei zumindest eine dritte Sonde dazu eingerichtet ist, eine Temperatur des Mediums zu bestimmen,
wobei die erste Sonde und die zweite Sonde auf der ersten Diagonalen angeordnet sind, und wobei die mindestens eine dritte Sonde auf der zweiten Diagonalen angeordnet ist.

Auf diese Weise lassen mittels der elektronischen Mess-/Betriebsschaltung ermittelte Leistungskoeffizienten zwischen jeweils einer als Heizelement ausgestalteten Sonde und einer dritten Sonde vorteilhaft zur Richtungserkennung nutzen, da bei beiden Strömungsrichtungen jeweils eine als Heizelement ausgestalteten Sonde direkt angeströmt wird und jeweils eine andere als Heizelement ausgestalteten Sonde im Strömungsschatten angeordnet ist. Dadurch, dass die als Heizelement ausgestalteten Sonden beide auf der ersten Diagonale parallel zur Messrohrachse liegen ergibt sich ein gleiches Messverhalten der ersten Sonde und der zweiten Sonde.

In einer Ausgestaltung ist die elektronische Mess-/Betriebsschaltung dazu eingerichtet, aus einer Gruppe umfassend die erste Sonde und die zweite Sonde ein erstes Gruppenmitglied und eine dritte Sonde heranzuziehen, um ein Sondenpaar zur Messung des Massedurchflusses bilden, und das jeweils andere Gruppenmitglied zur Bestimmung der Strömungsrichtung heranzuziehen,
wobei die elektronische Mess-/Betriebsschaltung dazu eingerichtet ist, bei einer Erkennung eines Strömungsrichtungswechsels die Gruppenmitglieder zur Messung des Massedurchflusses sowie zur Bestimmung der Strömungsrichtung die Gruppenmitglieder auszutauschen.

In einer Ausgestaltung umfassen die erste Sonde, die zweite Sonde und die mindestens eine dritte Sonde jeweils eine Sondenhülse,
wobei das Durchflussmessgerät Widerstandthermometer aufweist, wobei in durch die Sondenhülsen umfassten Innenräumen der ersten, zweiten und dritten Sonde jeweils mindestens ein Widerstandthermometer angeordnet ist, welches Widerstandthermometer dazu eingerichtet ist, eine Temperatur zu erfassen oder Wärmeenergie abzugeben.

In einer Ausgestaltung ist ein zur ersten Sonde gehörender Innenwinkel β der Raute kleiner als 90° und insbesondere kleiner als 75° und bevorzugt kleiner als 60°.

In einer Ausgestaltung ist ein Außendurchmesser der Sonden in jeweiligen Wirkbereichen mindestens 1 mm und insbesondere 1.5 mm und bevorzugt mindestens 2 mm und/oder höchsten 7 mm und insbesondere höchstens 5 mm und bevorzugt höchstens 4 mm.

In einer Ausgestaltung weist ein Flächenschwerpunkt eines Querschnitts des Sondengrundkörpers der ersten Sonde zu einem Flächenschwerpunkt eines Querschnitts des Sondengrundkörpers der zweiten Sonde einen ersten Abstand auf,
wobei der erste Abstand mindestens zwei Außendurchmesser ist.

In einer Ausgestaltung weisen Querschnitte der Sonden zumindest in Bereichen der Sondenwirkkörper einen runden Umriss auf.

Bei einem erfindungsgemäßen Verfahren zum Betreiben eines erfindungsgemäßen Durchflussmessgeräts
bilden in einem ersten Verfahrensschritt aus einer Gruppe umfassend die erste Sonde und die zweite Sonde ein erstes Gruppenmitglied mit einer dritten Sonde ein Sondenpaar zur Messung des Massedurchflusses, wobei das jeweils andere Gruppenmitglied zur Bestimmung der Strömungsrichtung herangezogen wird,
dadurch gekennzeichnet, dass bei einer Erkennung eines Strömungsrichtungswechsels in einem zweiten Verfahrensschritt zur Messung des Massedurchflusses sowie zur Bestimmung der Strömungsrichtung die Gruppenmitglieder ausgetauscht werden.

In einer Ausgestaltung bestimmt die elektronische Mess-/Betriebsschaltung einen ersten Leistungskoeffizienten mittels der ersten Sonde und zumindest einer dritten Sonde und einen zweiten Leistungskoeffizienten mittels der zweiten Sonde und zumindest einer dritten Sonde,
wobei die elektronische Mess-/Betriebsschaltung aus einem zeitlichen Verlauf eines Unterschieds der Leistungskoeffizienten, insbesondere aus einem Vorzeichenwechsel des Unterschieds auf einen Strömungsrichtungswechsel schließt.

Im Folgenden wird die Erfindung anhand von schematischen Ausführungsbeispielen beschrieben.
Fig. 1 zeigt Wirkbereiche einer beispielhaften erfindungsgemäßen Sondenanordnung eines thermischen Durchflussmessgerät;
Fig. 2 zeigt einen Querschnitt durch eine beispielhafte erste, zweite oder dritte Sonde; und
Fig. 3 zeigt eine Seitenansicht auf einen erfindungsgemäßen Sensor; und
Fig. 4 skizziert einen Aufbau eines beispielhaften schematischen erfindungsgemäßen thermischen Durchflussmessgeräts; und
Fig. 5 skizziert den Ablauf eines erfindungsgemäßen Verfahrens.

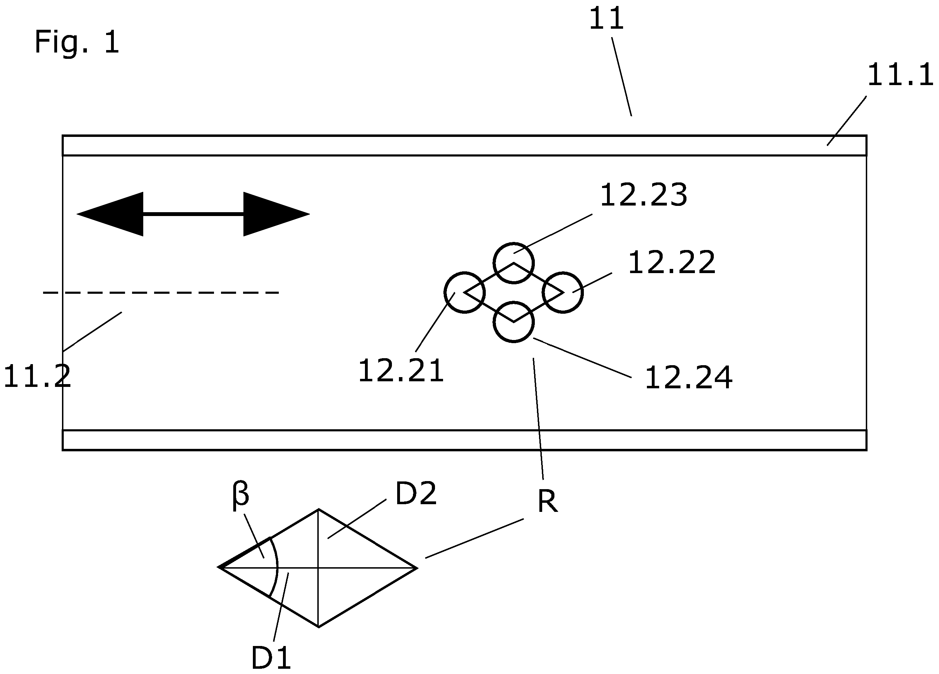

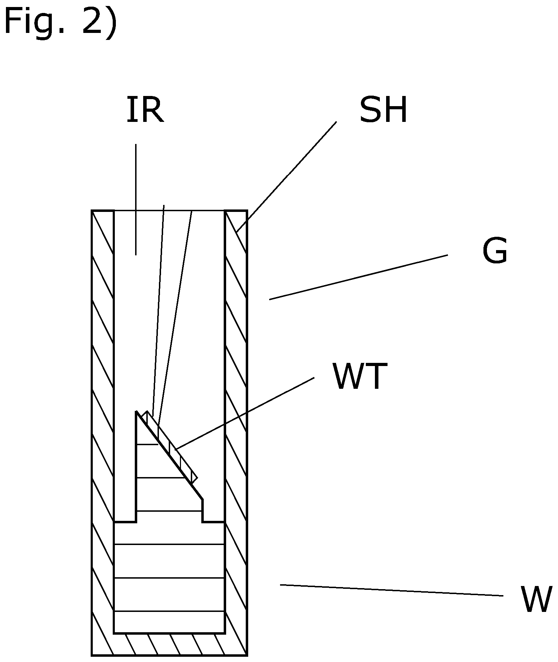

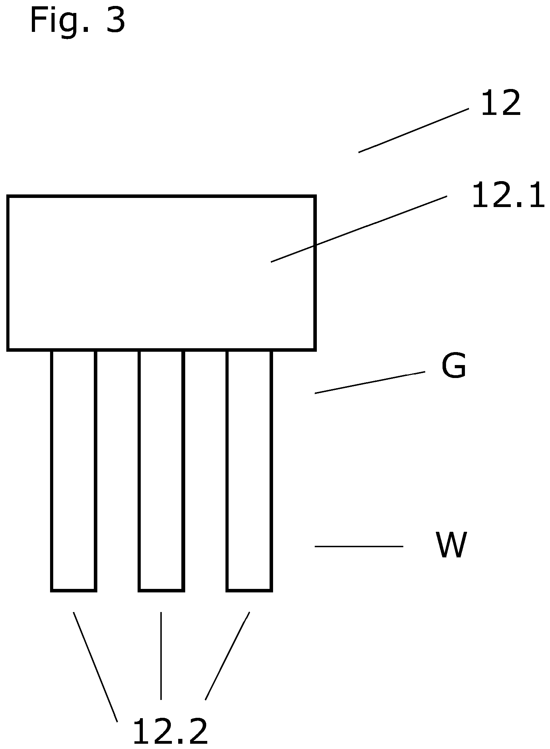

Fig. 1 zeigt Wirkbereiche einer erfindungsgemäße Sondenanordnung in einem Messrohr 11 mit einer Messrohrwand 11.1 mit jeweils einer ersten Sonde 12.21, einer zweiten Sonde 12.22, einer dritten Sonde 12.23 und einer vierten Sonde 12.24. Die Wirkbereiche sind die Bereiche, in denen Sondenwirkkörper W, (siehe Figs. 2 und 3) ihre Wirkung entfalten. Die Sondenwirkkörper schließen jeweils an einen Sondengrundkörper G der entsprechenden Sonde an, welche Sondengrundkörper an einen Sensorgrundkörper 12.1 angeschlossen sind. Die Wirkung der Sondenwirkkörper ist es, das Medium zu heizen, die Temperatur des Mediums zu bestimmen und/oder eine Strömung des Mediums im Messrohr zu beeinflussen. Die erste Sonde 12.21 und eine zweite Sonde 12.22 dazu eingerichtet sind, das Medium zu beheizen, wobei zumindest eine dritte Sonde 12.23 dazu eingerichtet ist, eine Temperatur des Mediums zu bestimmen. Die vierte Sonde kann dabei massiv ausgestaltet sein. Alternativ kann anstatt der vierten Sonde eine weitere dritte Sonde eingerichtet sein.

Die Sondengrundkörper einer Sondenanordnung spannen eine Raute auf, wobei eine erste Diagonale D1 der Diagonale parallel zu einer Messrohrachse 11.2 ausgerichtet ist. In Fig. 1 ist die Ausrichtung der Messrohrachse skizziert. Eine zweite Diagonale D2 liegt in einem Querschnitt des Messrohrs. Dadurch wird eine hohe Symmetrie bzw. Unabhängigkeit des Strömungswiederstands des Sensors von der Strömungsrichtung des Mediums erreicht. Ein Innenwinkel β, welcher der ersten Sonde zugeordnet ist, ist dabei kleiner als 90 Grad, so dass die Sondenanordnung einen kleinen Strömungswiderstand aufweist.

Erfindungsgemäß sind die erste Sonde und die zweite Sonde auf der ersten Diagonalen angeordnet, und wobei die mindestens eine dritte Sonde auf der zweiten Diagonalen angeordnet ist.

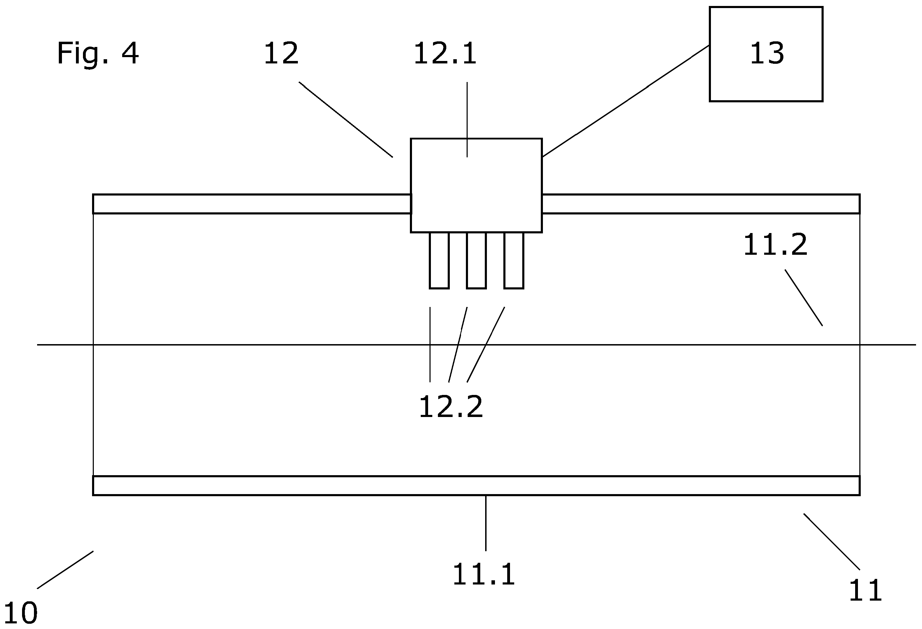

Auf diese Weise lassen mittels der elektronischen Mess-/Betriebsschaltung (siehe Fig. 4) ermittelte Leistungskoeffizienten zwischen jeweils einer als Heizelement ausgestalteten Sonde und einer dritten Sonde vorteilhaft zur Richtungserkennung nutzen, da bei beiden Strömungsrichtungen jeweils eine als Heizelement ausgestalteten Sonde direkt angeströmt wird und jeweils eine andere als Heizelement ausgestalteten Sonde im Strömungsschatten angeordnet ist. Dadurch, dass die als Heizelement ausgestalteten Sonden beide auf der ersten Diagonale parallel zur Messrohrachse liegen ergibt sich aufgrund der Symmetrie der Rautenanordnung ein gleiches Messverhalten der ersten Sonde bei Anströmung aus einer ersten Richtung und der zweiten Sonde bei Anströmung aus einer zweiten, der ersten Richtung entgegengesetzten Richtung. Diese Anordnung erweist sich dadurch als besonders vorteilhaft in Hinblick auf Messgenauigkeit auch bei geringer Strömungsgeschwindigkeit und Messstabilität im Hinblick auf Strömungsrichtungserkennung.

Beispielsweise bestimmt eine elektronische Mess-/Betriebsschaltung 13, siehe Fig. 4, einen ersten Leistungskoeffizienten mittels der ersten Sonde und zumindest einer dritten Sonde und einen zweiten Leistungskoeffizienten mittels der zweiten Sonde und zumindest einer dritten Sonde, wobei die elektronische Mess-/Betriebsschaltung aus einem zeitlichen Verlauf eines Unterschieds der Leistungskoeffizienten, insbesondere aus einem Vorzeichenwechsel des Unterschieds auf einen Strömungsrichtungswechsel schließt.

Fig. 2 zeigt einen Längsschnitt durch eine beispielhafte erste, zweite oder dritte Sonde, wobei eine Sondenhülse SH einen Innenraum IR der Sonde definiert, in welchem Innenraum die Sonde ein Widerstandsthermometer WT aufweist. Das Widerstandsthermometer ist dabei über ein Kontaktmittel thermisch und mechanisch mit der Sondenhülse gekoppelt. Das Kontaktmittel kann beispielsweise ein während der Herstellung der Sonde aufgeschmolzenes und nach Erstarren anschließend bearbeitetes Schmelzgut sein. Beispielsweise kann aber auch ein Kontaktierungsprozess wie Sprengplattieren von der Sondenhülse auf das Kontaktmittel und nachgelagertes Bearbeiten angewandt werden. Die hier genannten Beispiele sind nicht einschränkend auszulegen.

Fig. 3 zeigt eine schematische Seitenansicht eines Sensors 12 eines thermischen Durchflussmessgeräts, welcher Sensor einen Sensorgrundkörper 12.1 und Sonden 12.2 aufweist, wobei die Sonden wie in Figs. 2 a) und b) beschrieben jeweils einen Sondengrundkörper G und einen Sondenwirkkörper W umfassen.

Fig. 4 skizziert einen schematischen Aufbau eines erfindungsgemäßen thermischen Durchflussmessgeräts 10 mit einem Messrohr 11 mit einer Messrohrwand 11.1 und einer Messrohrachse 11.2, einem Sensor 12 mit einem Sensorgrundkörper 12.1 und mit Sonden 12.2, und einer elektronischen Mess-/Betriebsschaltung 13 zum Betreiben des Sensors und Bereitstellen von Durchflussmesswerten. Der Sensorgrundkörper ist dabei in der Messrohrwand mediendicht angebracht. Die Wirkbereiche der Sonden sind dabei bevorzugt in einem Strömungsbereich des Mediums angeordnet, in welchem Strömungsbereich ein lokaler Massedurchfluss weniger als 10% und insbesondere weniger als 5% und bevorzugt weniger als 2% von einem über einen Strömungsquerschnitt gebildeten Mittelwert abweicht.

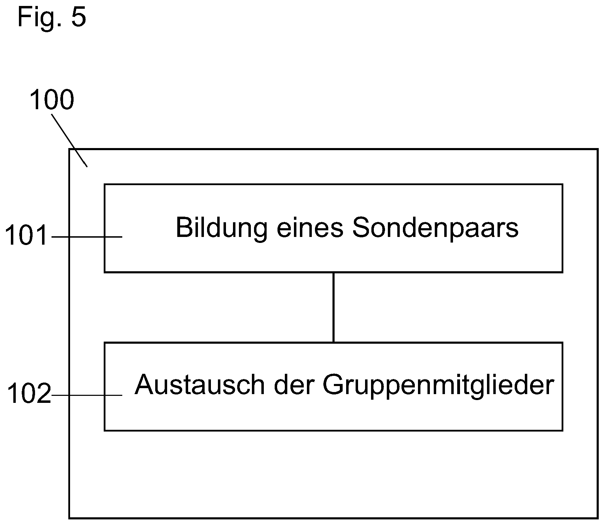

Fig. 5 skizziert den Ablauf eines beispielhaften erfindungsgemäßen Verfahrens 100.

In einem ersten Verfahrensschritt 101 bilden aus einer Gruppe umfassend die erste Sonde 12.21 und die zweite Sonde 12.22 ein Gruppenmitglied mit einer dritten Sonde 12.23 ein Sondenpaar zur Messung des Massedurchflusses, wobei das jeweils andere Gruppenmitglied zur Bestimmung der Strömungsrichtung herangezogen wird, wobei bei einer Erkennung eines Strömungsrichtungswechsels in einem zweiten Verfahrensschritt 102 zur Messung des Massedurchflusses sowie zur Bestimmung der Strömungsrichtung die Gruppenmitglieder ausgetauscht werden.

In einer Ausgestaltung bestimmt die elektronische Mess-/Betriebsschaltung einen ersten Leistungskoeffizienten mittels der ersten Sonde und zumindest einer dritten Sonde bestimmt und einen zweiten Leistungskoeffizienten mittels der zweiten Sonde und zumindest einer dritten Sonde, wobei die elektronische Mess-/Betriebsschaltung aus einem zeitlichen Verlauf eines Unterschieds der Leistungskoeffizienten, insbesondere aus einem Vorzeichenwechsel des Unterschieds auf einen Strömungsrichtungswechsel schließt. Auf diese Weise kann eine hohe Unabhängigkeit einer Messcharakteristik des Sensors 12 (z.B. Fig. 1) von einer Strömungsrichtung des Mediums im Messrohr erreicht werden.

### Bezugszeichenliste

- 10: thermisches Durchflussmessgerät
- 11: Messrohr
- 11.1: Messrohrwand
- 11.2: Messrohrachse
- 12: Sensor
- 12.1: Sensorgrundkörper
- 12.2: Sonde
- 12.21: erste Sonde
- 12.22: zweite Sonde
- 12.23: dritte Sonde
- 12.24: vierte Sonde
- 13: elektronische Mess-/Betriebsschaltung
- G: Sondengrundkörper
- W: Sondenwirkkörper
- SH: Sondenhülse
- R: Raute
- D1: erste Diagonale
- D2: zweite Diagonale
- WT: Widerstandsthermometer
- IR: Innenraum
- β: Innenwinkel

## Patentansprüche

1. Thermisches Durchflussmessgerät (10) zur Messung des Massedurchflusses eines Mediums in einem Messrohr umfassend:
ein Messrohr (11) mit einer Messrohrwand (11.1) und einer Messrohrachse (11.2);
einen Sensor (12) mit vier Sonden (12.2), welche Sonden ausgehend von einem Sensorgrundkörper (12.1) in das Messrohr hineinragen, wobei die Sonden dazu eingerichtet sind, das Medium zu heizen, dessen Temperatur zu bestimmen oder eine Strömung des Mediums im Messrohr zu beeinflussen;
eine elektronische Mess-/Betriebsschaltung (13), welche dazu eingerichtet ist, zumindest drei Sonden zu betreiben und mittels deren Betrieb Durchflussmesswerte zu erstellen und
bereitzustellen,
wobei jede Sonde einen Sondengrundkörper (G) und einen Sondenwirkkörper (W) aufweist, wobei der Sondengrundkörper jeweils auf einer dem Sensorgrundkörper zugewandten Seite der entsprechenden Sonde angeordnet ist, und wobei der Sondenwirkkörper jeweils auf einer dem Sensorgrundkörper abgewandten Seite der entsprechenden Sonde angeordnet ist,
wobei der Sondenwirkkörper dazu eingerichtet ist, das Medium zu heizen, die Temperatur des Mediums zu bestimmen und/oder eine Strömung des Mediums im Messrohr zu beeinflussen,
wobei die Sondengrundkörper säulenförmig ausgestaltet sind,
wobei die Sondengrundkörper auf einer Oberfläche des Sensorgrundkörpers eine Raute (R) aufspannen, wobei die Raute durch Flächenschwerpunkte von Querschnitten der Sondengrundkörper definiert ist,
wobei eine erste Diagonale (D1) der Raute parallel zur Messrohrachse (11.2) ist, und wobei eine zweite Diagonale (D2) in einem Messrohrquerschnitt liegt,
wobei eine erste Sonde (12.21) und eine zweite Sonde (12.22) dazu eingerichtet sind, das Medium zu beheizen,
wobei zumindest eine dritte Sonde (12.23) dazu eingerichtet ist, eine Temperatur des Mediums zu bestimmen,
wobei die erste Sonde und die zweite Sonde auf der ersten Diagonalen angeordnet sind, und wobei die mindestens eine dritte Sonde auf der zweiten Diagonalen angeordnet ist,
**dadurch gekennzeichnet, dass**
die Sonden auf der ersten Diagonale parallel zur Messrohrachse als Heizelement ausgestaltet sind,
wobei die elektronische Mess-/Betriebsschaltung dazu eingerichtet ist, Leistungskoeffizienten zwischen jeweils einer als Heizelement ausgestalteten Sonde und einer dritten Sonde zu ermitteln,
so dass die von der Mess-/Betriebsschaltung auf diese Weise ermittelten Leistungskoeffizienten zur Richtungserkennung nutzbar sind, da bei beiden Strömungsrichtungen jeweils eine als Heizelement ausgestaltete Sonde direkt angeströmt wird und jeweils eine andere als Heizelement ausgestaltete Sonde im Strömungsschatten angeordnet ist.

2. Durchflussmessgerät nach Anspruch 1,
wobei die elektronische Mess-/Betriebsschaltung dazu eingerichtet ist,
aus einer Gruppe umfassend die erste Sonde und die zweite Sonde ein erstes Gruppenmitglied und eine dritte Sonde heranzuziehen, um ein Sondenpaar zur Messung des Massedurchflusses bilden, und das jeweils andere Gruppenmitglied zur Bestimmung der Strömungsrichtung heranzuziehen, wobei die elektronische Mess-/Betriebsschaltung dazu eingerichtet ist,
bei einer Erkennung eines Strömungsrichtungswechsels die Gruppenmitglieder zur Messung des Massedurchflusses sowie zur Bestimmung der Strömungsrichtung die Gruppenmitglieder auszutauschen.

3. Durchflussmessgerät nach Anspruch 1 oder 2,
wobei die erste Sonde, die zweite Sonde und die dritte Sonde jeweils eine Sondenhülse (SH) umfassen,
wobei das Durchflussmessgerät Widerstandthermometer (WT) aufweist, wobei in durch die Sondenhülsen umfassten Innenräumen (IR) der ersten, zweiten und dritten Sonde jeweils mindestens ein Widerstandthermometer angeordnet ist, welches Widerstandthermometer dazu eingerichtet ist, eine Temperatur zu erfassen oder Wärmeenergie abzugeben.

4. Durchflussmessgerät nach einem der vorigen Ansprüche,
wobei eine vierte Sonde (12.24) massiv ist.

5. Durchflussmessgerät nach einem der vorigen Ansprüche,
wobei ein zur ersten Sonde gehörender Innenwinkel β der Raute kleiner als 90° und insbesondere kleiner als 75° und bevorzugt kleiner als 60° ist.

6. Durchflussmessgerät nach einem der vorigen Ansprüche,
wobei ein Außendurchmesser der Sonden in jeweiligen Wirkbereichen mindestens 1 mm und insbesondere 1.5 mm und bevorzugt mindestens 2 mm und/oder höchsten 7 mm und insbesondere höchstens 5 mm und bevorzugt höchstens 4 mm ist.

7. Durchflussmessgerät nach einem der vorigen Ansprüche,
wobei ein Flächenschwerpunkt eines Querschnitts des Sondengrundkörpers der ersten Sonde zu einem Flächenschwerpunkt eines Querschnitts des Sondengrundkörpers der zweiten Sonde einen ersten Abstand aufweist,
wobei der erste Abstand mindestens zwei Außendurchmesser ist.

8. Durchflussmessgerät nach einem der vorigen Ansprüche,
wobei Querschnitte der Sonden zumindest in Bereichen der Sondenwirkkörper einen runden Umriss aufweisen.

9. Verfahren zum Betreiben eines Durchflussmessgeräts nach einem der vorigen Ansprüche,
wobei in einem ersten Verfahrensschritt aus einer Gruppe umfassend die erste Sonde und die zweite Sonde ein Gruppenmitglied mit einer dritten Sonde ein Sondenpaar zur Messung des Massedurchflusses bilden, wobei das jeweils andere Gruppenmitglied zur Bestimmung der Strömungsrichtung herangezogen wird,
**dadurch gekennzeichnet, dass** bei einer Erkennung eines Strömungsrichtungswechsels in einem zweiten Verfahrensschritt zur Messung des Massedurchflusses sowie zur Bestimmung der Strömungsrichtung die Gruppenmitglieder ausgetauscht werden.

10. Verfahren nach Anspruch 9,
wobei die elektronische Mess-/Betriebsschaltung einen ersten Leistungskoeffizienten mittels der ersten Sonde und zumindest einer dritten Sonde bestimmt und einen zweiten Leistungskoeffizienten mittels der zweiten Sonde und zumindest einer dritten Sonde bestimmt,
wobei die elektronische Mess-/Betriebsschaltung aus einem zeitlichen Verlauf eines Unterschieds der Leistungskoeffizienten, insbesondere aus einem Vorzeichenwechsel des Unterschieds auf einen Strömungsrichtungswechsel schließt.

## Claims

1. A thermal flowmeter (10) for measuring the mass flow of a medium in a measuring tube, comprising:
a measuring tube (11) with a measuring tube wall (11.1) and a measuring tube axis (11.2);
a sensor (12) with four probes (12.2), said probes extending into the measuring tube starting from a sensor basic body (12.1), wherein the probes are configured to heat up the medium, determine its temperature or influence a flow of the medium in the measuring tube;
an electronic measuring/operating circuit (13) which is configured to operate at least three probes, as well as to both prepare and make available the measured flow values attained through their operation,
wherein each probe has one probe basic body (G) and one active probe body (W), wherein the probe basic body is arranged on a side of the corresponding probe facing toward the sensor basic body, and wherein the active probe body is arranged on a side of the corresponding probe facing away from the sensor basic body,
wherein the active probe body is configured to heat up the medium, determine the temperature of the medium, and/or influence a flow of the medium in the measuring tube,
wherein the probe basic bodies have a column-shaped design,
wherein the probe basic bodies are spread out on a surface of the sensor basic body in a rhombus shape (R), wherein the rhombus is defined by centroids of cross-sectional areas of the probe basic bodies,
wherein a first diagonal (D1) of the rhombus is parallel to the measuring tube axis (11.2), and
wherein a second diagonal (D2) is located in a measuring tube cross-section,
wherein a first probe (12.21) and a second probe (12.22) are configured to heat up the medium,
wherein at least one third probe (12.23) is configured to determine a temperature of the medium,
wherein the first probe and the second probe are arranged on the first diagonal, and wherein
the at least one third probe is arranged on the second diagonal, **characterized in that** the probes on the first diagonal parallel to the measuring tube axis are designed as a heating element,
wherein the electronic measuring/operating circuit is configured to determine coefficients of performance between each probe designed as a heating element and a third probe so that the coefficients of performance determined by the measuring/operating circuit in this way can be used to identify the direction, since a probe designed as a heating element is directly exposed to the flow in both flow directions and the other probe designed as the heating element is arranged away from the flow.

2. The flowmeter as claimed in claim 1,
wherein the electronic measuring/operating circuit is configured,
from a group comprising the first probe and the second probe, to use a first member of the group and a third probe to form a pair of probes for measuring the mass flow, and to use the other member of each group to determine the flow direction,
wherein the electronic measuring/operating circuit is configured to swap the members of the group for measuring the mass flow and the members of the group for determining the flow direction if a change in the flow direction is detected.

3. The flowmeter as claimed in claim 1 or 2,
wherein the first probe, the second probe, and the third probe each comprise a probe sleeve (SH),
wherein the flowmeter has resistance thermometers (WT), wherein at least one resistance thermometer, said resistance thermometer being configured to detect a temperature or dissipate thermal energy, is arranged in each of the interior spaces (IR) of the first, second, and third probes encapsulated by the probe sleeves.

4. The flowmeter as claimed in one of the preceding claims, wherein a fourth probe (12.24) is solid.

5. The flowmeter as claimed in one of the preceding claims,
wherein an internal angle ß of the rhombus belonging to the first probe is less than 90°, in particular less than 75°, and preferably less than 60°.

6. The flowmeter as claimed in one of the preceding claims,
wherein an external diameter of the probes in the respective active areas is at least 1 mm, in particular 1.5 mm, and preferably at least 2 mm, and/or a maximum of 7 mm, and in particular a maximum of 5 mm, and preferably a maximum of 4 mm.

7. The flowmeter as claimed in one of the preceding claims,
wherein a centroid of a cross-sectional area of the probe basic body of the first probe has a first distance from a centroid of a cross-sectional area of the probe basic body of the second probe,
wherein the first distance is at least two times the external diameter.

8. The flowmeter as claimed in one of the preceding claims,
wherein cross-sections of the probes have a round shape at least in areas of the active probe bodies.

9. A method for operating a flowmeter as claimed in one of the preceding claims,
wherein in a first process step, from a group comprising the first probe and the second probe, a member of the group is used with a third probe to form a pair of probes for measuring the mass flow, wherein the other member of each group is used to determine the flow direction, **characterized in that** in a second process step the members of the group for measuring the mass flow and the members of the group for determining the flow direction are swapped if a change in the flow direction is detected.

10. The method as claimed in claim 9,
wherein the electronic measuring/operating circuit determines a first coefficient of performance using the first probe and at least one third probe, and determines a second coefficient of performance using the second probe and at least one third probe, wherein the electronic measuring/operating circuit deduces a change in the flow direction from a chronological course of a difference in the coefficients of performance, in particular from a change in the sign in front of the difference.

## Revendications

1. Débitmètre thermique (10) destiné à la mesure du débit massique d'un produit dans un tube de mesure, lequel débitmètre comprend :
un tube de mesure (11) avec une paroi de tube de mesure (11.1) et un axe de tube de mesure (11.2) ;
un capteur (12) avec quatre sondes (12.2), lesquelles sondes partent d'un corps de base de capteur (12.1) dans le tube de mesure, les sondes étant conçues pour chauffer le produit, déterminer sa température ou influencer un écoulement du produit dans le tube de mesure ;
un circuit électronique de mesure/ fonctionnement (13), lequel est conçu pour faire fonctionner au moins trois sondes et pour générer et mettre à disposition des valeurs mesurées de débit au moyen de leur fonctionnement,
chaque sonde présentant un corps de base de sonde (G) et un corps actif de sonde (W), le corps de base de sonde étant disposé respectivement sur un côté de la sonde correspondante tourné vers le corps de base de capteur, et le corps actif de sonde étant disposé respectivement sur un côté de la sonde correspondante opposé au corps de base de capteur,
le corps actif de la sonde étant conçu pour chauffer le produit, déterminer la température du produit et/ou influencer un écoulement du produit dans le tube de mesure,
les corps de base de sonde étant réalisés en forme de colonne,
les corps de base de sonde formant un losange (R) sur une surface du corps de base du capteur, le losange étant défini par des centres de gravité de surface de sections transversales des corps de base de sonde,
une première diagonale (D1) du losange étant parallèle à l'axe de tube de mesure (11.2), et une deuxième diagonale (D2) étant située dans une section transversale du tube de mesure,
une première sonde (12.21) et une deuxième sonde (12.22) étant conçues pour chauffer le produit,
au moins une troisième sonde (12.23) étant conçue pour déterminer une température du produit,
la première sonde et la deuxième sonde étant disposées sur la première diagonale, et l'au moins une troisième sonde étant disposée sur la deuxième diagonale,
**caractérisé en ce que**
les sondes sur la première diagonale sont conçues parallèlement à l'axe de tube de mesure comme élément chauffant,
le circuit électronique de mesure/fonctionnement étant conçu pour déterminer des coefficients de puissance entre respectivement une sonde conçue comme un élément chauffant et une troisième sonde, de sorte que les coefficients de puissance déterminés de cette manière par le circuit de mesure/fonctionnement peuvent être utilisés pour la détection du sens, étant donné que, dans les deux sens d'écoulement, respectivement une sonde conçue comme un élément chauffant est soumise à un écoulement direct et respectivement une autre sonde conçue comme un élément chauffant est disposée dans l'ombre de l'écoulement.

2. Débitmètre selon la revendication 1,
pour lequel le circuit électronique de mesure/fonctionnement est conçu pour utiliser un premier membre de groupe et une troisième sonde d'un groupe comprenant la première sonde et la deuxième sonde pour former une paire de sondes pour la mesure du débit massique, et pour utiliser l'autre membre de groupe respectif pour déterminer le sens d'écoulement,
le circuit électronique de mesure/fonctionnement étant conçu, lors de la détection d'un changement de sens d'écoulement, pour échanger les membres de groupe pour la mesure du débit massique ainsi que pour déterminer le sens d'écoulement.

3. Débitmètre selon la revendication 1 ou 2,
pour lequel la première sonde, la deuxième sonde et la troisième sonde comprennent chacune un manchon de sonde (SH),
le débitmètre présentant des thermorésistances (WT), au moins une thermorésistance étant disposée dans des espaces intérieurs (IR), entourés par les manchons de sonde de la première, de la deuxième et de la troisième sonde, laquelle thermorésistance est conçue pour mesurer une température ou émettre de l'énergie thermique.

4. Débitmètre selon l'une des revendications précédentes,
pour lequel une quatrième sonde (12.24) est de structure solide.

5. Débitmètre selon l'une des revendications précédentes,
pour lequel un angle intérieur ß du losange appartenant à la première sonde est inférieur à 90° et notamment inférieur à 75° et de préférence inférieur à 60°.

6. Débitmètre selon l'une des revendications précédentes,
pour lequel un diamètre extérieur des sondes dans des zones actives respectives est d'au moins 1 mm et notamment de 1,5 mm et de préférence d'au moins 2 mm et/ou d'au plus 7 mm et notamment d'au plus 5 mm et de préférence d'au plus 4 mm.

7. Débitmètre selon l'une des revendications précédentes,
pour lequel un centre de gravité de surface d'une section transversale du corps de base de la première sonde présente une première distance par rapport à un centre de gravité de surface d'une section transversale du corps de base de la deuxième sonde,
la première distance étant égale à au moins deux diamètres extérieurs.

8. Débitmètre selon l'une des revendications précédentes,
pour lequel les sections transversales des sondes présentent un contour rond au moins dans les zones des corps actifs des sondes.

9. Procédé destiné à faire fonctionner un débitmètre selon l'une des revendications précédentes,
procédé pour lequel, dans une première étape du procédé, un membre du groupe comprenant la première sonde et la deuxième sonde forme avec une troisième sonde une paire de sondes pour mesurer le débit massique, l'autre membre du groupe étant utilisé pour déterminer le sens d'écoulement,
**caractérisé en ce que**, lors d'une détection d'un changement de sens d'écoulement dans une deuxième étape du procédé, les membres du groupe sont échangés pour mesurer le débit massique ainsi que pour déterminer le sens d'écoulement.

10. Procédé selon la revendication 9,
pour lequel le circuit électronique de mesure/fonctionnement détermine un premier coefficient de puissance au moyen de la première sonde et d'au moins une troisième sonde, et détermine un deuxième coefficient de puissance au moyen de la deuxième sonde et d'au moins une troisième sonde,
pour lequel le circuit électronique de mesure/de fonctionnement déduit un changement de direction d'écoulement à partir d'une évolution dans le temps d'une différence des coefficients de puissance, notamment d'un changement de signe de la différence.
